# EUROPEAN PATENT APPLICATION

(11) **EP 2 552 142 A1**
(43) Date of publication of application: **30.01.2013**
(21) Application number: 10848513.7
(22) Date of filing: 26.04.2010
(51) Int. Cl.: H04W 12/06, H04W 88/02

(54) **AUTHENTICATION METHOD AND SYSTEM USING PORTABLE TERMINAL**

(30) Priority: 20.04.2010 KR 20100036435; 26.03.2010 KR 20100027315
(71) Applicant: Igrove, Inc., Seoul 151-050 (KR)
(72) Inventor: LIM, Woo-hyeok, Seoul 151-050 (KR)
(74) Representative: Beder, Jens
(86) International application number: PCT/KR2010/002590
(87) International publication number: WO 2011/118871

(57) **Abstract**

The present invention authenticates a user using identifiers and authentication information provided and displayed by the mobile terminal and the service server to and on the user terminal, in conjunction with each other. Accordingly, unless an external intruder collects information necessary for authentication from the mobile terminal, the service server, and the user terminal in the same time span, the external intruder cannot perform authentication in place of a user. The present invention can be used to process authentication in portal sites, websites of financial institutions such as banks, personal blogs, homepages, and a variety of other websites using the Internet.

## Description

### Technical Field

The present invention relates to an authentication method and system using a mobile terminal and, more particularly, to an authentication method and system using a mobile terminal, which perform authentication using a mobile terminal, a service server, and an authentication system in conjunction with each other, thereby blocking authentication that is requested by an invalid person.

### Background Art

Currently, portal websites or banks authenticate users by performing identifier/password-based authentication or authenticate users using accredited certificates.

Identifier/password-based authentication methods allow information to be divulged to the outside and thus are vulnerable to malware when malware for intercepting key inputs has been installed in a user terminal (for example, a computer, a notebook computer, or a personal digital assistant (PDA)). Accredited certificates have the risk of losing security when the accredited certificates stored in the storage media (for example, a hard disk or USB memory) of user terminals have been divulged.

Although the identifier/password-based authentication methods are being used by banks, portal sites, and a variety of other service servers, personal information and authentication information stored in service servers are being divulged by the hacking of external intruders.

In order to deal with the above problem, financial institutions such as banks perform authentication using one-time passwords (OTPs), and provide a new password to each user whenever the button of a one-time password (OTP) is pressed, thereby providing for hacking. However, the use of OTPs is limited to on-line authentication in financial institutions. Furthermore, OTPs are chiefly kept in the accountants' departments of companies or places where on-line approvals are performed, and thus they are unsuitable for personal use.

The current vulnerability of security results from a method in which a service that provides a service (a financial service, an information provision service, a portal service, a game service, a shopping service, or the like) to a user processes authentication and then provides a service to an authenticated user.

Since the service server processes authentication, a user's information registered in the service server is all divulged and also user authentication becomes ineffective when the service server is hacked.

Furthermore, user terminals that have lower vulnerability of security than service servers are very susceptible to a variety of types of malware that is frequently and widely distributed over the Internet. Malware that has intruded into a user terminal may obtain authentication information by intercepting entered key values of a keyboard when a user types the authentication information (for example, an identifier/password) using the keyboard of a user terminal, or may steal a user's authentication information by obtaining an accredited certificate stored in the user terminal.

Therefore, the present inventor proposes an authentication method and system using a mobile terminal, which establish authentication routes that cannot be hacked at the same time and enhance the security of authentication information using the authentication routes, in place of the single server-based authentication methods.

### Disclosure

### Technical Problem

Accordingly, an object of the present invention is to provide an authentication method and system using a mobile terminal, which are secure and convenient for use because authentication information cannot be divulged by external intrusion or hacking as long as a mobile terminal, a service server, and an authentication system are not hacked at the same time.

### Technical Solution

In order to accomplish the above object, the present invention provides an authentication method using a mobile terminal, the method being performed via a service server and an authentication system connectable with the mobile terminal over a network, the method including obtaining identifier information displayed on a login screen of a user terminal via the mobile terminal; determining whether the identifier is a valid identifier via the service server, and, if the identifier is a valid identifier, obtaining authentication information from the mobile terminal and then authenticating the mobile terminal; and once the authentication of the mobile terminal has been processed, authenticating the user terminal to which the identifier was assigned in place of the service server.

In order to accomplish the above object, the present invention provides an authentication method using a mobile terminal, the method being performed via a service server and an authentication system connectable with the mobile terminal over a network, the method including obtaining any one of an image and a text each including an identifier displayed on a login screen of a user terminal via the mobile terminal; extracting the identifier from any one of the image and the text, determining whether the extracted identifier is valid via the service server, and, if the extracted identifier is a valid identifier, obtaining authentication information from the mobile terminal and authenticating the mobile terminal; and once the authentication of the mobile terminal has been successful, authenticating the user terminal to which the identifier was assigned in place of the service server.

In order to accomplish the above object, the present invention provides an authentication system using a mobile terminal, including a service server interworking module configured to share identical identifier information with a service server; an identifier authentication module configured to, when a user terminal connected over a network requests user authentication, obtain identifier information from an authentication screen of the service server displayed on a screen of a user terminal via a user's mobile terminal, and determine whether the identifier on a mobile terminal is valid by referring to the obtained identifier information and the identifier information shared with the service server; and an authentication processing module configured to, if the identifier is valid, processing authentication of the mobile terminal and the user terminal, performed by the service server, by referring to authentication information sent via the mobile terminal.

In order to accomplish the above object, the present invention provides an authentication system using a mobile terminal, including a service server interworking module configured to share identical identifier information with a service server; an image processing module configured to, when a user terminal connected over a network requests authentication of a user, obtain an image of an identifier displayed on an authentication screen of the service server displayed on a screen of a user terminal via the user's mobile terminal, and obtain an identifier by performing image processing on the identifier image; an identifier authentication module configured to determine whether the identifier on a mobile terminal side is valid by comparing the identifier obtained by the image processing module with the identifier information shared with the service server; and an authentication processing module configured to, if the identifier is valid, processing authentication of the mobile terminal and the user terminal, performed by the service server, by referring to authentication information sent via the mobile terminal.

### Advantageous Effects

As described above, the present invention can prevent a user's authentication information from being divulged by simple intrusion or hacking into the service server or user terminal. The present invention allows an agent for processing authentication and an agent for providing information related to authentication to be separate from and independent of a user terminal, and thus the user's authentication information is not divulged by intrusion into the service server or user terminal.

Furthermore, reliable authentication is performed using a smart phone, a mobile phone, or a PDA that is always carried by a user, and thus convenience can be enhanced.

### Description of Drawings

FIG. 1 is a conceptual diagram illustrating an authentication system according to the present invention, and an authentication method using the authentication system;
FIG. 2 is a block diagram of a mobile terminal according to an embodiment of the present invention; and
FIG. 3 is a block diagram of an authentication system according to an embodiment of the present invention.

### Mode for Invention

The present invention will be described in detail below with reference to the drawings.

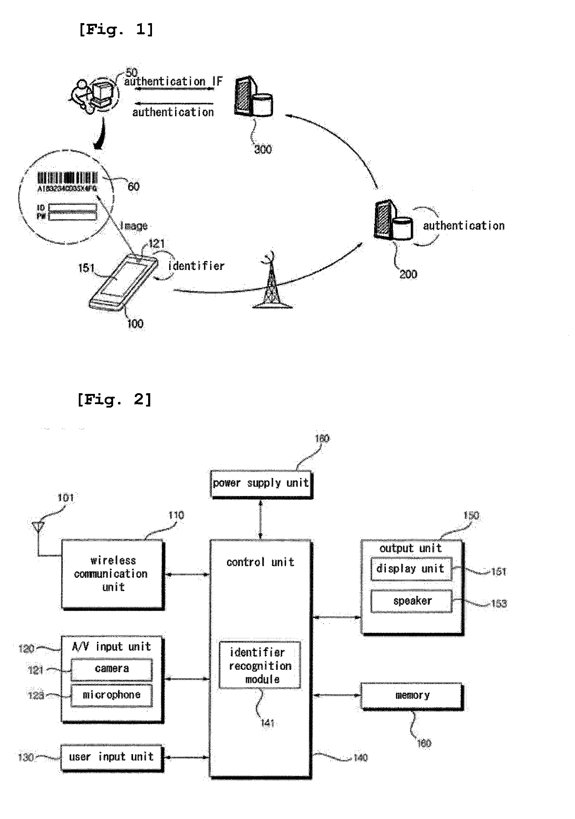

FIG. 1 is a conceptual diagram illustrating an authentication system according to the present invention, and an authentication method using the authentication system.

Prior to a description of FIG. 1, reference numeral "50" designates a "user terminal" such as a personal computer or a notebook computer, reference numeral "100" designates a "mobile terminal" such as a mobile phone, a smart phone or a PDA, reference numeral "200" designates the authentication system of the present invention, and reference numeral "300" designates a service server that provides a variety of services to users, such as a portal site, a general website, a blog, the website of a public institution, or the website of a financial institution such as a bank. Furthermore, the service server may be any of a variety of types of websites that provide information to users, personal homepages, a variety of websites that require login, and specific websites that ask subscribers for their information when they subscribe to the websites.

Furthermore, the mobile terminal 100 is capable of wireless communication, and is preferably a type of terminal that is provided with a control unit that enables images to be captured using a camera and image processing to be performed on the captured images, and memory.

When the mobile terminal 100 captures the identifier of a website, a camera is required. In contrast, when the mobile terminal 100 obtains an identifier using a separate character or a special character, a camera is not required. If an identifier assumes the form of a character or a special character, a user may input a character or a special character via the mobile terminal and the character, or the special character may be sent to the authentication system 200.

Furthermore, the authentication system 200 of the present invention should be connected to the service server over a wired/wireless network, and should be connected to the mobile terminal 100 over a wireless network or to the server (not shown) of the mobile communication service provider of the mobile terminal 100 over a wired network.

Referring to FIG. 1, in an authentication method according to the present invention, when the user terminal 50 connects with the service server 300 and performs authentication, for example, performs login, the service server 300 provides an authentication interface including an identifier to the user terminal 50.

The authentication interface shown in FIG. 1 includes an input box for receiving an identifier/password and an identifier 60.

Although in FIG. 1, the identifier 60 assumes the form of any one of 1D, 2D, and 3D barcodes, the form of the identifier 60 is not limited to the form of a barcode image. For example, the identifier 60 may assume the form of a 1D barcode, a 2D barcode, a 3D barcode, a diagram, an image, a hieroglyphic character, a character, a special character, or a picture. Since the identifier 60 itself does not assume the form of a file, the distributor of malware or a hacker cannot access the identifier 60 as it is even when the identifier 60 is stolen by the malware or hacking of an external intruder. Furthermore, since the identifier 60 does not continuously maintain its form, but changes whenever the user terminal 50 connects with the service server 300, the identifier 60 cannot be reused even if it is stolen by hacking. Typically, in the hacking of authentication information, when the same identifier/password is repeatedly used, authentication information can have reliability. In contrast, in the present invention, the identifier 60 continuously changes, and thus such reliability is not achieved.

Furthermore, the identifier 60 itself does not authenticate a user.

In the present invention, the identifier 60 is required merely to perform a single process of user authentication. The identifier 60 itself does not authenticate a user, nor does it divulge authentication information.

Once the authentication interface including the identifier 60 has been displayed on the monitor of the user terminal 50, a user captures the identifier 60 using the mobile terminal 100, and may send the captured identifier 60 to the authentication system 200, or may perform image processing on the captured identifier 60, thereby extracting a numeric string, a character string, a color value, a barcode value, or other identifier information which was agreed with the authentication system 200. In this case, an identifier recognition module that generates identifier information by performing image processing on the identifier 60 should be installed in the mobile terminal 100. The identifier recognition module installed in the mobile terminal 100 may have the form of hardware or software.

If the mobile terminal 100 performs image processing and the identifier 60 has the form of a barcode, the identifier recognition module may performs image processing on the identifier 60 captured by a camera, thereby reading barcode values and then generating identifier information. If the identifier 60 has the form of an image, it may be possible to acquire grayscale levels or color values of the image and then generate identifier information. In this case, the grayscale levels or color values of the image may be calculated for the entire image, the center of the image, or a portion of the image.

Thereafter, the mobile terminal 100 provides the identifier information to the authentication system 200.

The authentication system 200 may connect with the mobile terminal 100 over a wireless network and acquire identifier information, or may acquire identifier information using a wired network via the server (not shown) of a mobile communication service provider that provides a communication service to the mobile terminal 100.

In this case, the authentication system 200 is operating in conjunction with the service server 300 that provided the authentication interface to the user terminal 50, and shares the identifier information that the service server 300 has provided to the user terminal 50. The identifier may change over time, or may change whenever a user connects with the service server 300.

The authentication system 200 generates the identifier information from the identifier that the service server 300 has provided to the user terminal 50, and compares the identifier information with identifier information provided by the mobile terminal 100, thereby determining the validity of the identifier information. Thereafter, if it is determined that the identifier information is valid, the authentication system 200 requests authentication information from the mobile terminal 100, and the mobile terminal 100 provides the authentication information to the authentication system 200, thereby performing a final authentication process. Here, the authentication information may be any one of the following:
- an identifier/password,
- an authentication number that was agreed with a user,
- biometric information such as iris information, a fingerprint, or a voice, and
- a temporary approval number that the authentication system 200 issues to the mobile terminal 100. If the authentication system 200 has the authentication number agreed with a user, the user needs to register, in advance, his or her authentication number with the authentication system 200 via the user terminal 50 or mobile terminal 100. The temporary approval number may be a disposable approval number that is issued to the mobile terminal 100 when the identifier information of the corresponding mobile terminal 100 is valid.

That is, in the present invention, the user terminal 50 itself that will connect with the service server 300 does not perform authentication.

In the present invention, the user terminal 50 only displays an identifier on a monitor screen in the authentication process, but does not become a principal agent of the authentication. However, for authentication, the identifier displayed on the user terminal 50 is necessary for the authentication process of the authentication system 200 using authentication information. Additional authentication is performed based on the identifier. Accordingly, even if the user terminal 50 is attacked by a hacker or malware and therefore the identifier is stolen, it is not possible to perform any authentication related to a user using the identifier.

If it is desired to obtain the authentication information of a user, both the authentication system 200 and the service server 300 should be hacked, which is very difficult in terms of probability. As long as the relationships between the authentication system 200, the user terminal 50, and the service server 300 are not divulged, the divulgence of the identifier corresponds to the simple obtainment of a barcode image.

Meanwhile, when the service server 300 or authentication system 200 is intruded into, an external intruder such as a hacker cannot obtain authentication information even when the external intruder attacks the service server because the service server 300 only displays the identifier on the screen of the user terminal 50, but does not have means for authenticating a user. Furthermore, when the authentication system 200 is intruded into, an intruder cannot log in to the service server 300 in place of a user nor can the intruder do a cash transfer or an account transfer via the server of a financial institution because the user cannot be authenticated as long as the identifier information sent by the user terminal 50 and the identifier obtained by the service server 300 are not given.

The authentication system 200 obtains authentication information from the mobile terminal 100 if the identifier information sent by the mobile terminal 100 is identical to the identifier information related to the identifier provided by the service server 300, and notifies the service server 300 of authentication results (the success of authentication or the failure of authentication) if pieces of authentication information are identical to each other. The service server 300 authenticates the user terminal 50 to which the identifier was issued based on the authentication results, and then determines whether login can be successful.

Here, the authentication information may be one or more of the phone number of the mobile terminal 100, a MAC address, USIM or SIM card information, and a user-set authentication number. Here, the MAC address is a unique number that is assigned to the communication module of the mobile terminal that performs wired/wireless communication. Since the MAC address is unique, it is very accurate and effective in the identification of the mobile terminal 100.

FIG. 2 is a block diagram of a mobile terminal according to an embodiment of the present invention.

The shown mobile terminal includes a wireless communication unit 110, an audio/video (A/V) input unit 120, a user input unit 130, an output unit 150, a power supply unit 160, a control unit 140, and a memory 160.

The wireless communication unit 110 performs voice or data communication with a base station via an antenna 101, and may perform a broadcast reception function such as a digital multimedia broadcast (DMB) reception function, a Bluetooth function, and a wireless Internet function.

The A/V input unit 120 acquires audio signals or video signals. A microphone 123 may be used to receive audio signals, and a camera 121 may be used to receive video signals.

The camera 121 captures an identifier displayed on the monitor of the user terminal 50, and provides the captured identifier to the control unit 140. The camera 121 may include a separate exposure control function in order to capture an identifier displayed on the monitor at an appropriate exposure.

The microphone 123 is formed of a microphone device, and is provided to perform a call or recording. The microphone 123 converts an external voice or a sound signal into an electrical signal, and provides the resulting signal to the control unit 140.

The user input unit 130 includes numeric keys, menu keys, and functions. These keys are used to control the operation of the mobile terminal and perform voice communication as number selection keys and directional keys.

The output unit 150 includes a speaker 153 and a display unit 151 that output audio or video signals.

The speaker 153 plays back ringtones, voices, or the playback sounds of an audio file.

The display unit 151 displays an image of an identifier captured by the camera 121, and allows a user to determine whether the identifier has been accurately captured. Furthermore, the display unit 151 may provide an interface necessary for a communication mode when the mobile terminal 100 is in communication mode, and may display a captured image when the mobile terminal 100 is in image capture mode.

The memory 160 may store temporary data that is generated during the running of a program for performing the program processing and control of the control unit 140.

The memory 160 may be at least one of flash memory-type, hard disk-type, multimedia card micro-type, and card-type memory (for example, SD or XD memory), RAM, and ROM.

The control unit 140 generally controls the wireless communication unit 110, the A/V input unit 120, the user input unit 130, the output unit 150, and the memory 160, and processes voice communication, data communication, and images captured by the camera. Furthermore, the control unit 140 obtains identifier information from an identifier by processing an image captured by the camera 121.

The control unit 140 includes an identifier recognition module 141 for extracting identifier information from an image in the form of a hardware or software module in order to obtain identifier information. The identifier recognition module 141 extracts an identifier from an image in compliance with a method agreed with the authentication system 200. For example, if an identifier displayed on the user terminal 50 is a 1D barcode or a 2D barcode, the identifier recognition module 141 may obtain a barcode value by reading a barcode. If an identifier displayed on the user terminal 50 is an color image and the provision of the type of color or information about color has been agreed with the authentication system 200, the identifier recognition module 141 may obtain the type of color or the value of the color of an image captured by the camera 121 as identifier information. Furthermore, the identifier recognition module 141 may generate identifier information using the grayscale level value of an image captured by the camera 121.

Meanwhile, the control unit 140 does not perform separate image processing, and may send an image captured by the camera 121 to the authentication system 200 via the wireless communication unit 110. In this case, the control unit 140 may send the image captured by the camera 121 via the wireless communication unit 110, or may send the character or special character-based identifier to the authentication system 200 via the user input unit 130.

If the control unit 140 does not perform image processing and sends the image to the authentication system 200, the authentication system 200 extracts the identifier by processing the image, and compares the extracted identifier with the identifier sent from the service server 300 to the user terminal 50, thereby performing authentication.

The power supply unit 160 supplies power to the mobile terminal, and preferably assumes a form that can be charged and discharged in order to achieve portability. The power supply unit 160 includes a rechargeable battery and a power control device for uniformly regulating a voltage applied to the battery and a voltage output from the battery.

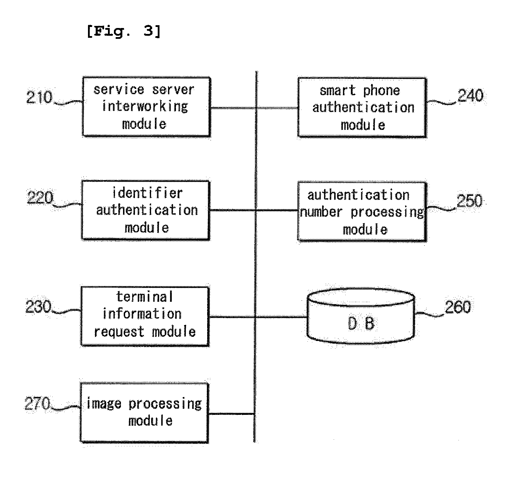

FIG. 3 is a block diagram of an authentication system according to an embodiment of the present invention.

Referring to FIG. 3, the authentication system 200 includes a service server interworking module 210, an identifier authentication module 220, a terminal information request module 230, a smart phone authentication module 240, an authentication number processing module 250, and a database 260.

When the service server 300 provides an authentication interface including an identifier to the user terminal 50, the service server interworking module 210 obtains an identifier that is identical to an identifier provided by the service server 300 to the user terminal 50 and then generates identifier information.

When the user terminal 50 requests service from the service server 300, for example, when the user terminal 50 makes a service request and then a login screen is displayed, the service server interworking module 210 may obtain an identifier from the service server 300. In this case, when the service server 300 provides an identifier to the user terminal 50, the service server interworking module 210 may obtain an identifier that is identical to the identifier provided by the service server 300 to the terminal 50.

Meanwhile, the service server interworking module 210 may generate an identifier and provide the generated identifier to the service server 300, thereby performing authentication.

In this case, when the user terminal 50 makes a service request, the service server 300 requests an image including an identifier or a text-based identifier from the service server interworking module 210, and the service server interworking module 210 provides the image or text including the identifier to the service server 300. Here, the service server interworking module 210 should prevent the same identifier from being generated in the same time span. Although the service server interworking module 210 may generate an identifier in a random manner or in compliance with a preset rule, the same identifier should be prevented from being generated in the same time span.

When the mobile terminal 100 captures an identifier displayed on the monitor and then sends the captured image, when the mobile terminal 100 sends an identifier formed based on a character or a special character, or when an image is processed based on a method agreed with the authentication system 200 and then generated identifier information is sent, the identifier authentication module 220 determines whether an identifier sent by the mobile terminal 100 is valid. In this case, the identifier authentication module 210 compares identifier information related to the identifier of the user terminal 50 obtained from the service server interworking module 210 with identifier information obtained from the mobile terminal 100, and determines that the identifier information is valid if the two pieces of identifier information are identical to each other and determines that the identifier information is not valid if the two pieces of identifier information are not identical to each other.

If the authentication of the identifier information has failed, the identifier authentication module 220 may request the service server 300 to send a new identifier to the user terminal 50 via the service server interworking module 210 and then authenticate the user terminal 50 again, or may terminate the authentication process.

The terminal information request module 230 may connect with the server (not shown) of a mobile communication service provider that provides a communication service to the mobile terminal 100 via a network and obtain information about the mobile terminal 100 via the server of a mobile communication service provider, or may obtain terminal information directly from the mobile terminal 100. Once the terminal information request module 230 has obtained MAC address information or user information from the server of a mobile communication service provider or mobile terminal 100 in order to determine the authentication information of the mobile terminal, the terminal information request module 230 provides the information to the smart phone authentication module 240.

The smart phone authentication module 240 obtains the user information, MAC address information, or SIM or USIM card information of the mobile terminal via the terminal information request module 230, and determines whether the obtained information is identical to information stored in the database 260. The database 260 contains information about the mobile terminal 100, user information, and authentication information, which are provided when a user first registers the authentication information. The smart phone authentication module 240 compares information related to the mobile terminal 100 stored in the database 260 with information about the mobile terminal 100 provided by the server of a mobile communication service provider or mobile terminal 100, thereby determining whether a valid user has sent valid identifier information.

The authentication information processing module 250 receives authentication information, for example, any one of an identifier/password, an authentication number agreed with a user, and a temporary approval number that the authentication system 200 issues to the mobile terminal 100, that is provided by the mobile terminal 100 after the authentication of the identifier has been processed by the mobile terminal 100, and determines whether the received authentication information is identical to information stored in the database 260. If, as a result of the determination, the two pieces of information are identical to each other, the authentication information processing module 250 completes user authentication via the mobile terminal 100, and notifies the service server 300 of the success of the authentication.

Once the success of the authentication has been notified by the authentication information processing module 250, the service server 300 determines that the user terminal 50 has been successful in the authentication, allows normal access, and provides a variety of services that can be utilized by a login user. If the service server 300 is the server of a financial institution, such as a bank, the service server 300 allows the user terminal 50 to do an account transfer, search an account, use a loan service, pay a utility bill, and use a variety of services that are provided by the financial institution such as a bank.

Although in this case, a one-time password (OTP) or an accredited certificate is not required of the user, an OTP or an accredited certificate may be used along with the authentication system.

The user authenticated by the authentication system 200 has validity that is identical to validity that is obtained when login has been performed using an OTP or an accredited certificate.

Meanwhile, an identifier that is identical to an identifier displayed on the user terminal 50 is not displayed on another user terminal in the same time span. This means that the service server 300 does not provide the same identifier to another user terminal in the same time span. This signifies that an external intruder cannot use an identifier on another computer even when the external intruder obtains the identifier because an identifier according to the present invention is unique in the same time span, like an OTP.

Furthermore, once the user has registered the MAC address information of the mobile terminal 100 or authentication information using the user terminal or mobile terminal, the authentication system 200 can determine whether the user is a valid user when the mobile terminal 100 sends an identifier.

Typically, when identifier/password-based authentication is processed using the user computer 50, it is effective for any user terminal to attempt authentication only if identifiers/passwords are identical to each other. In contrast, in the present invention, a user terminal is limited to the user terminal 50 that allows the mobile terminal 100 to capture an identifier. However, the user terminal 50 is not limited to a single user terminal, but any user terminal that allows an identifier to be captured by the camera 121 of the mobile terminal 100 may perform authentication. Accordingly, it is apparent that an external intruder cannot access a bank and perform a financial transaction in place of a user unless the external intruder acquires the user's mobile terminal 100, even if the external intruder obtains an identifier, user information, or authentication information. It is also apparent that an external intruder cannot perform a financial transaction in place of a user unless the external intruder knows the user's authentication information, even if the external intruder possesses the user's mobile terminal.

When the mobile terminal 100 sends an image including an identifier, the image processing module 270 extracts the identifier by performing image processing on the image.

As described above, in the present invention, the image processing may be performed by the mobile terminal 100 or authentication system 200.

If the image processing is not performed by the mobile terminal 100, the image processing module 270 may extract an identifier from an image sent by the mobile terminal 100, extract an identifier based on the shape of a portion of an image at a specific location, obtain an identifier by reading a barcode if an image is in the form of a barcode or using the color values of an image, or obtain an identifier using grayscale level values of an image.

If, for example, an identifier displayed on the user terminal 50 is in the form of a color image and is represented by grayscale levels in the range of 0 to 255, the identifier may be represented by values in the range of 0 to 255. In this case, if reference is made to the colors, an identifier may be generated using tens of color values and grayscale level value in 255 steps. It is apparent that an identifier may be generated by substituting grayscale level values and color values into a preset equation.

On the other hand, the image processing module 270 may generate an identifier by substituting a barcode or numerals for the shape of the portion of an image at a specific location. There are various methods of obtaining an identifier using an image, and they are not limited to the methods that are described in the present specification.

### [Description of reference numerals]

50: user terminal 100: mobile terminal
200: authentication system 300: service server

### Industrial Applicability

The present invention authenticates a user using identifiers and authentication information provided and displayed by the mobile terminal and the service server to and on the user terminal, in conjunction with each other. Accordingly, unless an external intruder collects information necessary for authentication from the mobile terminal, the service server, and the user terminal in the same time span, the external intruder cannot perform authentication in place of a user. The present invention can be used to process authentication in portal sites, websites of financial institutions such as banks, personal blogs, homepages, and a variety of other websites using the Internet.

## Claims

1. An authentication method using a mobile terminal, the method being performed via a service server and an authentication system connectable with the mobile terminal over a network, the method comprising:
obtaining identifier information displayed on a login screen of a user terminal via the mobile terminal;
determining whether the identifier is a valid identifier via the service server, and, if the identifier is a valid identifier, obtaining authentication information from the mobile terminal and then authenticating the mobile terminal; and
once the authentication of the mobile terminal has been processed, authenticating the user terminal to which the identifier was assigned in place of the service server.

2. The authentication method of claim 1, wherein the identifier is at least one of a barcode, an image, a picture, a diagram, a character, a special character, and a hieroglyphic character.

3. The authentication method of claim 1, wherein the authentication information is any one of an authentication number, iris information, a voice, and a fingerprint.

4. The authentication method of claim 1, wherein the authenticating mobile terminal comprises performing authentication by comparing authentication information sent by the mobile terminal with information about the mobile terminal and authentication information previously recorded in the authentication system.

5. The authentication method of claim 4, wherein the authentication information is one of a phone number of the mobile terminal, an MAC address, and a user-set authentication number.

6. An authentication method using a mobile terminal, the method being performed via a service server and an authentication system connectable with the mobile terminal over a network, the method comprising:
obtaining any one of an image and a text each including an identifier displayed on a login screen of a user terminal via the mobile terminal;
extracting the identifier from any one of the image and the text, determining whether the extracted identifier is valid via the service server, and, if the extracted identifier is a valid identifier, obtaining authentication information from the mobile terminal and authenticating the mobile terminal; and
once the authentication of the mobile terminal has been successful, authenticating the user terminal to which the identifier was assigned in place of the service server.

7. An authentication system using a mobile terminal, comprising:
a service server interworking module configured to share identical identifier information with a service server;
an identifier authentication module configured to, when a user terminal connected over a network requests user authentication, obtain identifier information from an authentication screen of the service server displayed on a screen of a user terminal via a user's mobile terminal, and determine whether the identifier on a mobile terminal is valid by referring to the obtained identifier information and the identifier information shared with the service server; and
an authentication processing module configured to, if the identifier is valid, processing authentication of the mobile terminal and the user terminal, performed by the service server, by referring to authentication information sent via the mobile terminal.

8. The authentication system of claim 7, wherein the identifier is at least one of a barcode, an image, a picture, a diagram, a character, a special character, and a hieroglyphic character.

9. The authentication system of claim 7, wherein the authentication information is any one of an authentication number, iris information, a voice, and a fingerprint.

10. The authentication system of claim 7, further comprising a terminal information request module configured to obtain information about the mobile terminal from a server of a mobile communication service provider or the mobile terminal and provide the information about the mobile terminal to the authentication processing module.

11. The authentication system of claim 7, wherein the mobile terminal is any one of a mobile phone, a smart phone, and a Personal Digital Assistant (PDA).

12. An authentication system using a mobile terminal, comprising:
a service server interworking module configured to share identical identifier information with a service server;
an image processing module configured to, when a user terminal connected over a network requests authentication of a user, obtain an image of an identifier displayed on an authentication screen of the service server displayed on a screen of a user terminal via the user's mobile terminal, and obtain an identifier by performing image processing on the identifier image;
an identifier authentication module configured to determine whether the identifier on a mobile terminal side is valid by comparing the identifier obtained by the image processing module with the identifier information shared with the service server; and
an authentication processing module configured to, if the identifier is valid, processing authentication of the mobile terminal and the user terminal, performed by the service server, by referring to authentication information sent via the mobile terminal.
